# EUROPEAN PATENT SPECIFICATION

(11) **EP 3 985 285 B1**
(45) Date of publication and mention of the grant of the patent: **10.04.2024**
(21) Application number: 21202012.7
(22) Date of filing: 11.10.2021
(51) Int. Cl.: F16H 61/431, B60K 17/356, B60K 17/10

(54) **METHOD AND SYSTEM FOR CONTROLLING A HYDRAULIC TRANSMISSION OF A WORK OR AGRICULTURAL VEHICLE**
VERFAHREN UND SYSTEM ZUR STEUERUNG EINES HYDRAULISCHEN GETRIEBES EINES ARBEITS- ODER LANDWIRTSCHAFTLICHEN FAHRZEUGS
PROCÉDÉ ET SYSTÈME POUR COMMANDER UNE TRANSMISSION HYDRAULIQUE D'UN VÉHICULE DE TRAVAIL OU AGRICOLE

(30) Priority: 09.10.2020 IT 202000023830
(43) Date of publication of application: 20.04.2022
(73) Proprietor: CNH Industrial Italia S.p.A., 10156 Torino (IT)
(72) Inventor: GARRAMONE, Adriano, 73100 Lecce (IT); GRAVILI, Andrea, 73100 Lecce (IT); LIBERTI, Stefano, 73100 Lecce (IT); VENEZIA, Antonio, 10153 Torino (IT)
(74) Representative: CNH Industrial IP Department

(56) References cited:
- EP-A1- 3 323 938
- US-A1- 2013 268 170

## Description

### Field of the invention

The present invention relates to the field of hydraulic driveline systems of agricultural or work vehicles.

### State of the art

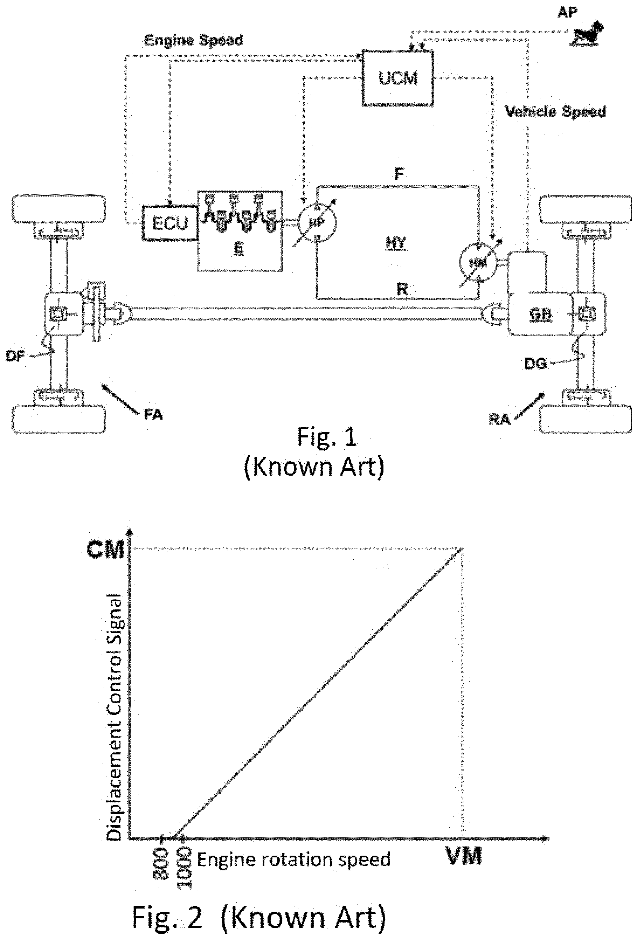

Motorized agricultural or work vehicles are well known for handling materials and performing specific demanding tasks. With reference to Figure 1, a prime mover E, generally an internal combustion, drives in rotation a variable displacement hydraulic pump HP, which powers a hydraulic motor HM operatively connected to the hydraulic pump defining a so-called hydrostat HY, in which a forward hydraulic line F and a return hydraulic line R interconnect the hydraulic pump with the hydraulic motor.

The displacement of the hydraulic pump is electrically controlled. Generally, there is a map for adjusting of the hydraulic pump geometry, which allows to control the displacement of the latter according to the rotation speed of the prime mover. Typically, the relationship between pump displacement and prime mover speed is linear starting from prime mover low idle conditions. In other words, when the prime mover is at low idle, the angle of the swash plate that defines the displacement of the hydraulic pump achieves zero displacement. An example of the relationship between the pump displacement control signal and the rotation speed of the prime mover is shown on Figure 2 of the prior art. One further example can be found in patent application US2013/268170A.

It is evident from what described above that the control signal of the pump displacement and the displacement of the pump itself are directly proportional between each other: as one grows, the other also grows and vice versa. This implies that they can be confused with each other without particular warnings.

In the diagram, it can be clearly seen that the straight line intersects the abscissa axis at about 900 rpm. This is because, generally, the idle speed for medium and high displacement engines is normally lower than this value of 900 rpm. In the diagram, this intersection is at 800 rpm. The straight line ends at the coordinate point VM, CM which means the coordinate point "maximum speed", "maximum displacement", in which the control signal of the pump displacement is at its maximum value corresponding to the maximum speed of the prime mover (high idle).

For convenience, in the following of this description, the law of variation of the displacement control signal as a function of the speed of the prime mover is indicated as "proportional trend".

The value of the pump displacement depends on the displacement control signal, specifically as the signal value increases, the pump displacement increases, but also on the load offered by the vehicle, specifically, as the load increases, the pump displacement decreases.

The load offered by the vehicle depends on many factors. Among these factors:
- the weight of the vehicle,
- the inclination of the ground on which the vehicle is placed,
- soil conditions,
- the condition of the wheels of the vehicle,
- the load carried by the vehicle.

Therefore, as the load increases, the number of engine revolutions in which the vehicle begins to move also increases, which corresponds to a non-zero value of the pump displacement.

For this reason, when the load is high, the vehicle may appear unresponsive at the start, as the driver must press the accelerator pedal increasingly to increase the prime mover speed till forcing the vehicle to move.

Again, with reference to the example in Figure 1, a UCM control unit controls the variable displacement pump proportionally to the rotation speed of the prime mover "Engine speed". The UCM control unit, among other things, monitors the position of the accelerator pedal AP, the vehicle speed "vehicle speed" for example by means of a sensor associated with the transmission.

The transmission, in the example, comprises a front axle FA with a relative differential DF and a rear axle RA with a relative differential DG and the hydraulic motor HM is operationally connected to at least one of the axles, directly or, for example, by means of a gearbox GB discrete reports.

### Summary of the invention

Scope of the present invention is to increase the response of the propulsion system of the vehicle.

The basic idea of the present invention is to vary the control map of the displacement of the hydraulic pump in order to improve the starting response of the vehicle, i.e. while the driver begins to accelerate the prime mover.

In particolar, the idea is to realize a modified control map, wjhich privieds for a sudden increase of the control signal of the pump displacement when, at reaching of a predetermined prime mover rotation speed, the vehicle is (still) stationary.

This predetermined speed of rotation of the prime mover is chosen to be low enough to be reached rapidly by the prime mover, but in any case sufficiently greater than the low idle speed, in order to avoid undesired starting of the vehicle.

Preferably, this sudden increase in the control signal of the displacement of the hydraulic pump is obtained by means of a feedback control, in which the input variable is the speed of the vehicle.

According to a first preferred variant of the invention, the map is made so as to keep constant, while the speed of rotation of the prime mover increases, the displacement control signal at the value reached at the sudden increase, until it intersects the proportional trend, and then continues in accordance with the proportional trend up to the maximum value of the control signal corresponding to the maximum speed of the prime mover.

According to a second preferred variant of the invention, the map is made to connect linearly from the value at the sudden increase to the maximum value of the displacement control signal corresponding to the maximum value of the rotation speed of the prime mover.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figure 1 shows a diagram, according to the known art, of a propulsion system of an agricultural or work machine according to the known art;
Figure 2 shows a diagram representing a relationship between the speed of rotation of the prime mover and the control signal of the displacement of the hydraulic pump;
Figures 3 and 4 show two preferred variants of the invention;
Figure 5 shows a modified diagram with respect to the solution of Figure 3;
Figure 6 shows an example of an agricultural or work vehicle on which the present invention is implemented;
Figure 7 shows an exemplary flow chart of the method object of the present invention.

The same reference numbers and letters in the figures identify the same elements or components or functions.

In the context of this description, the term "second" component does not imply the presence of a "first" component. These terms are in fact used as labels to improve clarity, having no ordinal meaning unless it is clear from the text that there is a precise order to be respected.

### Detailed description of exemplary embodiments

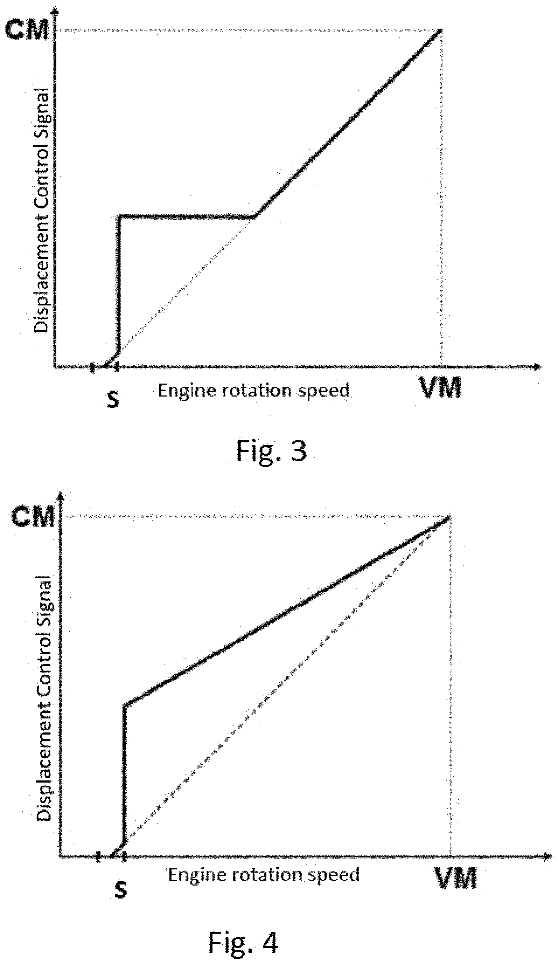

Figures 3 and 4 show two diagrams in which the "Displacement control signal" of the hydraulic pump is plotted as a function of the "prime mover speed" by means of a marked line.

In both cases the "proportional trend" of the displacement control signal as a function of the engine rotation speed is shown in dashed lines, which is the control strategy of the prior art and which is adopted when the vehicle does not present any difficulty to start, or in some operating conditions of the control of the present invention.

According to the present solution, see figures 3 and 4, a first linear segment is identified between the rotation speed in which the trend intersects the abscissa axis (for example 900 rpm) and a predetermined rotation speed S in which the vehicle must start to move (for example 1000 rpm), therefore the trend is marked and coincides with the proportional trend of the known art.

Reached (C1) the predetermined speed of rotation S of the prime mover, in which it is desired to force the vehicle to start moving and if the vehicle is still in stationary conditions (C2) then there is a sudden increase (C) of the control signal of the displacement characterized by an approximately vertical trend that grows until the vehicle starts to move.

The quasi vertical trend is found in a diagram of the control signal of the pump displacement as a function of the rotation speed.

The vertical increasing of the control signal ends when the start of the vehicle dynamic condition starts, namely the wheel starts to move.

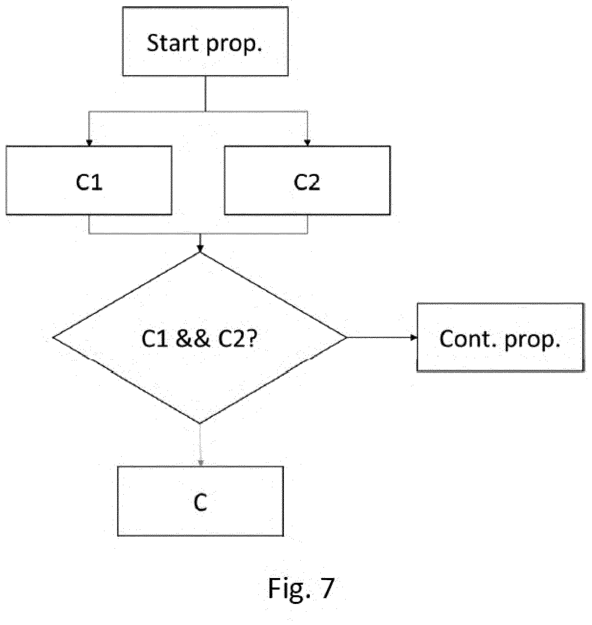

Figure 7 summarizes, by means of a flow chart, a preferred variant of the present invention relating to the first vehicle starting phases, which are common to both the variants of Figure 3 and 4.

The "Start prop" step indicates that at the beginning, when one starts pressing the accelerator pedal, the control signal of the displacement of the hydraulic pump is proportional, but when both conditions C1 (reached S) and C2 (stationary vehicle) are verified, then the sudden increase of the control signal is triggered at step C, vice versa if one of the two conditions, that is C2 is not verified (!C2) then it continues with the step "Cont prop." which indicates to continue with the proportional trend of the known art. Preferably, this quasi-vertical trend of the control signal is obtained by means of a feedback control in which the independent variable is the vehicle speed. Obviously, the more or less marked step trend depends on the dynamics of the control.

If, on the other hand, the vehicle starts to move without particular impediments, for example, due to a low load, and therefore it results that in S the vehicle is in dynamic conditions (!C2) then, the control curve of the displacement of the hydraulic pump is substantially overlapping with the "proportional trend" of the known art.

The value reached by the step control signal when the vehicle starts to move, according to figure 3, remains constant until it intersects the proportional trend adopted in the known art.

Subsequently, that is, from the intersection point up to the value of the control signal corresponding to the maximum displacement, this trend coincides with the aforementioned proportional trend of the prior art.

Instead, according to the variant of Figure 4, this signal continues to increase with the rotation speed assuming a linear trend from the value corresponding to the step up to the value of the control signal corresponding to the maximum displacement.

It is therefore evident that, while in figure 3 four sections are identified, in figure 4 only 3 sections are identified.

It is worth noting that the linear trend traced after the plateau following the step may not coincide with the dashed proportional trend.

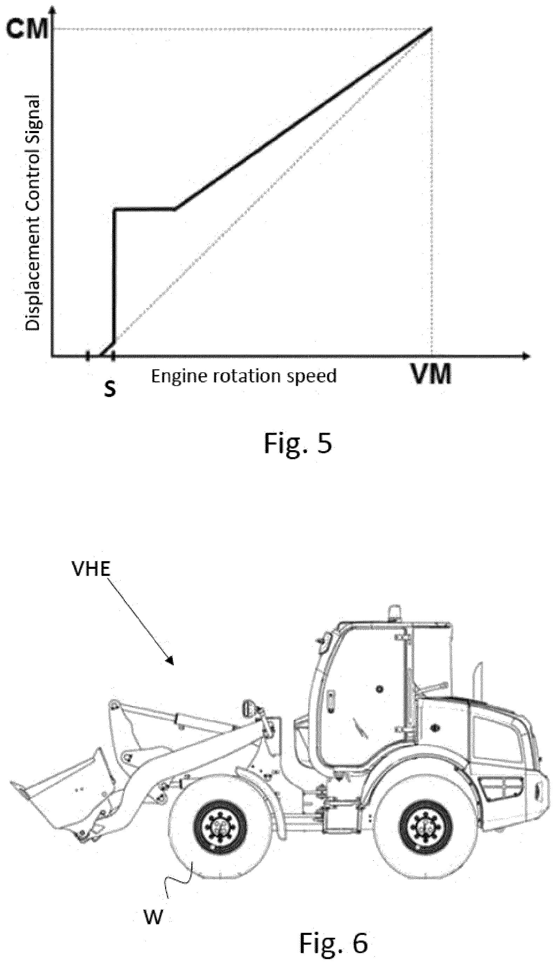

Figure 5 clarifies the fact that the linear trend that follows the constant trend can be completely different from the hatched one, which is adopted, in accordance with the known art, when the vehicle start to move without particular impediments, at a rotational speed lower than rotational speed S.

If the solution of Figure 5 is carefully analyzed, it is understood that it is an intermediate solution with respect to the solutions of Figures 3 and 4. More particularly, it is understood that the solution of Figure 4 is obtained by making the plateau as small as desired.

Advantageously, thanks to the present solution, the vehicle is much more reactive when one starts pressing the accelerator pedal to induce forward (or backward) of the same vehicle.

Furthermore, advantageously, the available torque of the prime mover and the characteristics of the hydraulic pump are exploited to the fullest, allowing the vehicle to move forward while maintaining low the speed of rotation of the prime mover, which is generally an internal combustion, with significant fuel saving.

Figure 6 shows an example of a work or agricultural vehicle that implements the present invention.

The present invention can be advantageously realized by means of a computer program which comprises coding means for carrying out one or more steps of the method, when this program is executed on a computer. Therefore it is intended that the scope of protection extends to said computer program and further to computer readable means comprising a recorded message, said computer readable means comprising program coding means for carrying out one or more steps of the method, when said program is run on a computer.

Implementation variants of the described non-limiting example are possible, without however departing from the scope of protection of the present invention, including all the equivalent embodiments for a person skilled in the art, to the content of the claims.

From the above description, the person skilled in the art is able to realize the object of the invention without introducing further construction details.

## Claims

1. A method for controlling a hydraulic transmission of a work or agricultural vehicle (VHE) comprising a prime mover (E) configured to drive in rotation a hydraulic pump (HP) configured to supply exclusively a hydraulic motor (HM) operatively connected to at least one vehicle wheel (W), the hydraulic pump being provided of a controllable variable displacement, the method is characaterized in that it comprises circa vertical increasing (C) of a control signal of the pump displacement, plot as a function of the prime mover rotation speed (S), at reaching of a predetermined prime mover rotation speed (S), when the vehicle is in stand still conditions (C2), wherein the control signal and the pump displacement are directly proportional between each other.

2. Method according to claim 1, wherein a trend of the control signal of the pump displacement includes a linear trend from the low idle condition until the reaching of said predetermined rotation speed (S) of the prime mover and a sudden increase if the vehicle is in stand still conditions, while if the vehicle is in dynamic conditions (!C2), said trend continues to be linearly dependent on the prime mover speed.

3. Method according to claim 1 or 2, wherein said predetermined rotational speed (S) is contained in a speed range having ends 800 and 1100 rpm.

4. Method according to any one of the preceding claims, wherein the value of the displacement control signal, reached with said circa vertical increase, is kept constant up to an intersection with a linear trend of the displacement control signal on the speed of the prime mover, and wherein as the speed of rotation of the engine increases, the control signal assumes a trend coinciding with said linear trend from the intersection up to a maximum value (CM) corresponding to the maximum displacement of the hydraulic pump.

5. Method according to claim 4, wherein said maximum value of the displacement control signal corresponds to the maximum value (VM) of the rotation speed of the prime mover.

6. Method according to any one of the preceding claims, wherein said sudden increase is obtained by means of a feedback control based on the vehicle speed.

7. Method according to any one of claims 1 to 6, wherein the value of the displacement control signal assumed at the circa vertical increase is linearly connected up to the maximum value (CM) of the control signal corresponding to the maximum value of the displacement of the hydraulic pump.

8. Method according to claim 7, wherein the maximum value of the displacement control signal corresponds to the maximum value (CM) of the speed of rotation of the prime mover.

9. Computer program comprising program coding means adapted to carry out all the steps of any one of claims 1 to 8, when said program is run on a computer.

10. Computer readable means comprising a recorded program, said computer readable means comprising program coding means adapted to perform all steps of any one of claims 1 to 8, when said program is run on a computer.

11. Work or agricultural vehicle (VHE) comprising a prime mover (E) configured to drive a hydraulic pump (HP) in rotation configured to power a hydraulic motor (HM) operatively connected to at least one vehicle wheel, the hydraulic pump having a controllable variable displacement, processing means configured to control said hydraulic pump as a function of a rotational speed of the prime mover, wherein said processing means are configured to increase circa vertically(C) a control signal of the pump displacement, plot as a function of the prime mover rotation speed, at reaching of a predetermined prime mover rotation speed (S), when the vehicle is in stand still conditions (C2), wherein the control signal and the pump displacement are directly proportional between each other.

## Patentansprüche

1. Verfahren zum Steuern eines hydraulischen Getriebes eines Arbeits- oder eines landwirtschaftlichen Fahrzeugs (VHE) mit einer Antriebsmaschine (E), die dazu eingerichtet ist, eine hydraulische Pumpe (HP) drehend anzutreiben, die dazu eingerichtet ist, ausschließlich einen hydraulischen Motor (HM) zu versorgen, der wirkend mit mindestens einem Fahrzeugrad (W) verbunden ist, wobei die Hydraulikpumpe als eine steuerbare variable Verstellpumpe vorgesehen ist,
wobei das Verfahren **dadurch gekennzeichnet ist, dass** es ein in etwa vertikales Ansteigen (C) eines Steuersignals der Pumpenverstellung aufweist, aufgezeichnet als eine Funktion der Drehgeschwindigkeit (S) der Antriebsmaschine bei Erreichen einer vorbestimmten Drehgeschwindigkeit (S) der Antriebsmaschine, wenn das Fahrzeug sich in einem Stillstand (C2) befindet, wobei das Steuersignal und die Pumpenverstellung direkt proportional zueinander sind.

2. Verfahren nach Anspruch 1, wobei ein Trend des Steuersignals der Pumpenverstellung einen linearen Trend von dem niedrigen Leerlaufzustand bis zum Erreichen der vorbestimmten Drehgeschwindigkeit (S) der Antriebsmaschine und einen plötzlichen Anstieg umfasst, wenn das Fahrzeug sich im Stillstand befindet, wohingegen wenn das Fahrzeug sich in einem dynamischen Zustand (!C2) befindet, der Trend weiterhin linear abhängig von der Geschwindigkeit der Antriebsmaschine verläuft.

3. Verfahren nach Anspruch 1 oder 2, wobei die vorbestimmte Drehgeschwindigkeit (S) in einem Geschwindigkeitsbereich mit den Endpunkten von 800 bis 1100 U/min enthalten ist.

4. Verfahren nach einem der vorhergehenden Ansprüche, wobei der Wert des Verstellsteuersignals, der durch den in etwa vertikalen Anstieg erreicht wird, bis zu einem Schnittpunkt mit einem linearen Trend des Verstellsteuersignals der Geschwindigkeit der Antriebsmaschine konstant gehalten wird, und wobei, wenn die Drehgeschwindigkeit des Motors steigt, das Steuersignal einen Trend annimmt, der mit dem linearen Trend von dem Schnittpunkt bis zu einem Maximalwert (CM) übereinstimmt, der der maximalen Verstellung der Hydraulikpumpe entspricht.

5. Verfahren nach Anspruch 4, wobei der Maximalwert des Verstellsteuersignals dem Maximalwert (VM) der Drehgeschwindigkeit der Antriebsmaschine entspricht.

6. Verfahren nach einem der vorhergehenden Ansprüche, wobei der plötzliche Anstieg mittels einer Regelung basierend auf der Fahrzeuggeschwindigkeit erhalten wird.

7. Verfahren nach einem der Ansprüche 1 bis 6, wobei der Wert des Verstellsteuersignals, der an dem in etwa vertikalen Anstieg angenommen wird, bis zu dem maximalen Wert (CM) des Steuersignals linear verbunden ist, das dem maximalen Wert der Verstellung der Hydraulikpumpe entspricht.

8. Verfahren nach Anspruch 7, wobei der Maximalwert des Verstellsteuersignals dem Maximalwert (CM) der Drehgeschwindigkeit der Antriebsmaschine entspricht.

9. Computerprogramm, das Programmkodierungsmittel aufweist, die dazu ausgebildet sind, alle Schritte nach einem der Ansprüche 1 bis 8 auszuführen, wenn das Programm auf einem Computer ausgeführt wird.

10. Computerlesbares Medium mit einem gespeicherten Programm, wobei das computerlesbare Medium Programmkodierungsmittel aufweist, die dazu ausgebildet sind, alle Schritte nach einem der Ansprüche 1 bis 8 auszuführen, wenn das Programm auf einem Computer ausgeführt wird.

11. Arbeits- oder landwirtschaftliches Fahrzeug (VHE) mit einer Antriebsmaschine (E), die dazu eingerichtet ist, eine Hydraulikpumpe (HP) drehend anzutreiben, die dazu eingerichtet ist, einen Hydraulikmotor (HM) anzutreiben, der wirkend mit mindestens einem Rad des Fahrzeugs verbunden ist, wobei die Hydraulikpumpe eine steuerbare variable Verstellung aufweist, und mit Verarbeitungsmitteln, die dazu eingerichtet sind, die Hydraulikpumpe in Abhängigkeit einer Drehgeschwindigkeit der Antriebsmaschine zu steuern, wobei die Verarbeitungsmittel dazu eingerichtet sind, ein Steuersignal der Pumpenverstellung in etwa vertikal (C) zu steigern, aufgezeichnet als eine Funktion der Drehgeschwindigkeit der Antriebsmaschine, bei Erreichen einer vorbestimmten Drehgeschwindigkeit (S) der Antriebsmaschine, wenn das Fahrzeug sich im Stillstand (C2) befindet, wobei das Steuersignal und die Pumpenverstellung direkt proportional zueinander sind.

## Revendications

1. Un procédé de commande d'une transmission hydraulique d'un véhicule de travail ou véhicule agricole (VHE) comprenant un moteur primaire (E) configuré pour entraîner en rotation une pompe hydraulique (HP) configurée pour alimenter exclusivement un moteur hydraulique (HM) connecté fonctionnellement à au moins une roue du véhicule (W), la pompe hydraulique étant dotée d'une cylindrée variable contrôlable, le procédé est **caractérisé en ce qu'**il comprend une augmentation presque verticale (C) d'un signal de commande de la cylindrée de la pompe, tracé en fonction de la vitesse de rotation du moteur primaire (S), lorsqu'une vitesse de rotation prédéterminée du moteur primaire (S) est atteinte, lorsque le véhicule est dans des conditions d'arrêt (C2), dans lequel le signal de commande est directement proportionnel à la cylindrée de la pompe

2. Procédé selon la Revendication 1, dans lequel une tendance du signal de commande de la cylindrée de la pompe comprend une tendance linéaire depuis la condition de ralenti bas jusqu'à l'atteinte de ladite vitesse de rotation prédéterminée (S) du moteur primaire et une augmentation soudaine si le véhicule est dans des conditions d'arrêt, tandis que si le véhicule est dans des conditions dynamiques ( ! C2), ladite tendance continue de dépendre linéairement de la vitesse du moteur primaire.

3. Procédé selon la Revendication 1 ou la Revendication 2, dans lequel ladite vitesse de rotation prédéterminée (S) est contenue dans une plage de vitesses comprise entre 800 et 1 100 tr/min.

4. Procédé selon l'une quelconque des revendications précédentes, dans lequel la valeur du signal de commande de la cylindrée, atteinte avec ladite augmentation presque verticale, est maintenue constante jusqu'à une intersection avec une tendance linéaire du signal de commande de la cylindrée par rapport à la vitesse du moteur primaire, et dans lequel à mesure que la vitesse de rotation du moteur augmente, le signal de commande adopte une tendance coïncidant avec ladite tendance linéaire depuis l'intersection jusqu'à une valeur maximale (CM) correspondant à la cylindrée maximale de la pompe hydraulique.

5. Procédé selon la Revendication 4, dans lequel ladite valeur maximale du signal de commande de la cylindrée correspond à la valeur maximale (VM) de la vitesse de rotation du moteur primaire.

6. Procédé selon l'une quelconque des revendications précédentes, dans lequel ladite augmentation soudaine est obtenue au moyen d'une commande à rétroaction basée sur la vitesse du véhicule.

7. Procédé selon l'une quelconque des revendications 1 à 6, dans lequel la valeur du signal de commande de la cylindrée prise lors de l'augmentation presque verticale est reliée linéairement à la valeur maximale (CM) du signal de commande correspondant à la valeur maximale de la cylindrée de la pompe hydraulique.

8. Procédé selon la Revendication 7, dans lequel la valeur maximale du signal de commande de la cylindrée correspond à la valeur maximale (CM) de la vitesse de rotation du moteur primaire.

9. Programme informatique comportant des moyens pour coder un programme, adapté pour réaliser toutes les étapes de l'une quelconque des revendications 1 à 8, lorsque ledit programme est exécuté sur un ordinateur.

10. Moyens lisibles par ordinateur comprenant un programme enregistré, lesdits moyens lisibles par ordinateur comprenant des moyens de codage de programme adaptés pour effectuer toutes les étapes de l'une quelconque des revendications 1 à 8, lorsque ledit programme est exécuté sur un ordinateur.

11. Véhicule de travail ou véhicule agricole (VHE) comprenant un moteur primaire (E) configuré pour entraîner en rotation une pompe hydraulique (HP) configurée pour alimenter un moteur hydraulique (HM) connecté fonctionnellement à au moins une roue du véhicule, la pompe hydraulique étant dotée d'une cylindrée variable contrôlable, les moyens de traitement configurés pour commander ladite pompe hydraulique en fonction d'une vitesse de rotation du moteur primaire, dans lequel lesdits moyens de traitement sont configurés pour entraîner une augmentation presque verticale (C) d'un signal de commande de la cylindrée de la pompe, tracé en fonction de la vitesse de rotation du moteur primaire (S), lorsqu'une vitesse de rotation prédéterminée du moteur primaire (S) est atteinte, lorsque le véhicule est dans des conditions d'arrêt (C2), dans lequel le signal de commande est directement proportionnel à la cylindrée de la pompe.
